# EUROPÄISCHE PATENTSCHRIFT

(11) **EP 0 525 134 B1**
(45) Veröffentlichungstag und Bekanntmachung des Hinweises auf die Patenterteilung: **13.09.1995**
(21) Anmeldenummer: 92902503.9
(22) Anmeldetag: 05.12.1991
(51) Int. Cl.: C04B 41/53

(54) **VERFAHREN ZUR HERSTELLUNG VON GROBKERAMISCHEN PRODUKTEN WIE DACH- UND MAUERZIEGEL**
PROCESS FOR PRODUCING ORDINARY CERAMIC PRODUCTS SUCH AS ROOF TILES AND BRICKS
PROCEDE POUR LA FABRICATION DE PRODUITS EN CERAMIQUE GROSSE, TELS QUE TUILES OU BRIQUES

(30) Priorität: 20.02.1991 CH 514/91
(43) Veröffentlichungstag der Anmeldung: 03.02.1993
(73) Patentinhaber: ZZ Ziegeleien, CH-8045 Zürich (CH)
(72) Erfinder: SAURENMANN, Kurt, CH-8155 Niederhasli (CH)
(74) Vertreter: Schmauder, Klaus Dieter
(86) Internationale Anmeldenummer: CH9100246
(87) Internationale Veröffentlichungsnummer: WO9214688

(56) Entgegenhaltungen:
- DE-A- 2 504 035
- US-A- 4 217 337
- DERWENT JAPANESE PATENT REPORT accession no. 82-16506E [09] , DERWENT PUBLICATIONS LTD. , London , GB ; & JP-A-57 011887
- DERWENT JAPANESE PATENT REPORT accession no. 85-028326 [05] , DERWENT PUBLICATIONS LTD., London, GB; & JP-A-59223285
- DERWENT JAPANESE PATENT REPORT , accession no. 84-092313 [15] , DERWENT PUBLICATIONS LTD. , London , GB ; & JP-A-59 039781

## Beschreibung

### Technisches Gebiet

Die Erfindung betrifft ein Verfahren zur Herstellung von grobkeramischen Produkten wie Dach- und Mauerziegein gemäss Oberbegriff des Anspruches 1.

### Stand der Technik

Verfahren der eingangs genannten Art sind bekannt. Bei kalkhaltigem Tonmaterial besteht dabei das Problem, dass in grobkeramischen Produkten vorhandenes wasserlösliches Calziumoxyd mit Wasser zu unerwünschten Abplatzungen und/oder Ausblühungen führen kann. Kalkhaltiges Tonmaterial erfordert deshalb ein sehr sorgfältiges Brennen der Rohlinge, wobei diese in der Regel bei erhöhten Temperaturen einer langen Brenndauer unterzogen werden müssen. Damit lassen sich aber brauchbare grobkeramische Produkte aus kalkhaltigem Tonmaterial mit modernen Hochleistungsöfen im Schnellbrand-Verfahren nicht herstellen.

DERWENT JAPANESE PATENT REPORT AN:82-16596E (09) DERWENT PUBLICATIONS LTD & JP-A-57 011887 beschreibt die Herstellung von Dachziegein aus Zement. Vor der Emaillierung werden die Dachziegel mit einer schwachen Säure beschichtet dann wird die Email-Schicht mittels Brennen eines Email-Materials auf der behandelten Oberfläche gebildet. Durch die Behandlung der Oberfläche mit Säure wird Aufrauhung und Ablättern der Email-Schicht verhindert.

### Darstellung der Erfindung

Aufgabe der Erfindung ist es, ein Verfahren zur Herstellung von grobkeramischen Produkten, wie Dach- und Mauerziegeln anzugeben, mit dem einerseits Abplatzungen und/oder Ausblühungen zumindest an einer Sichtfläche der Produkte vermieden werden und das ein Schnellbrand-Verfahren ermöglicht.

Die Aufgabe wird erfindungsgemäss gelöst durch die kennzeichnenden Merkmale des Anspruches 1.

Man hat in überraschender Weise festgestellt, dass grobkeramische Produkte wie Dach- und Mauerziegel, deren Rohlinge vor dem Brennen mindestens an einer Sichtfläche mit einer Säure behandelt worden sind, dort keine Ausblühungen und Abplatzungen zeigen und überdies im Schnellbrand-Verfahren mit Hochleistungsöfen hergestellt werden können. Damit können die Brenndauer wesentlich, beispielsweise auf die Hälfte, und gegebenenfalls die Brenntemperatur gesenkt werden.

Vorteilhafte Ausgestaltungen des Verfahrens sind in den Ansprüchen 2 bis 11 beschrieben.

Grundsätzlich sind verschiedene Säuren für die Behandlung der Rohlinge geeignet. Besonders vorteilhaft und schonend ist jedoch die Verwendung einer schwachen Säure gemäss Anspruch 2. Solche schwachen Säuren können beispielsweise Zitronensäure oder Ameisensäure sein. Besonders vorteilhaft ist es, wenn man gemäss Anspruch 3 Essigsäure verwendet, die einerseits kostengünstig ist und andererseits bei der Reaktion mit dem Rohling flüchtige, nicht schädliche Produkte liefert.

Die Säure kann auf verschiedene Weise auf die Rohlinge aufgebracht werden, so beispielsweise durch Aufrollen gemäss Anspruch 6, Aufpinseln gemäss Anspruch 5 oder vorzugsweise Aufsprühen gemäss Anspruch 4. In jedem Fall wird man die Säure vor dem Brennen und gemäss Anspruch 7 vorzugsweise auch vor einem allfälligen Engobieren oder Glasieren aufbringen. Man kann die Säure entweder gemäss Anspruch 8 auf den nassen Rohling oder gemäss Anspruch 9 auf den getrockneten Rohling, aufbringen.

Die Behandlung des Rohlings mit Säure ist insbesondere für kalkreiches Tonmaterial gemäss Anspruch 10 geeignet.

Besonders gute Ergebnisse erhält man, wenn das Tonmaterial gemäss Anspruch 11 aufbereitet ist.

Nach dem erfindungsgemässen Verfahren lassen sich grobkeramische Produkte wie Dach- und Mauerziegel der verschiedensten Art herstellen, wobei es darauf ankommt, dass mindestens eine oder alle Sichtflächen mit Säure behandelt worden sind. Bei den übrigen Flächen, insbesondere wenn es sich um solche handelt, die in einen Mauerverband eingebunden werden, wird das Ausblühen und Abplatzen bereits dadurch verhindert, dass durch den Verbund der Zutritt von Wasser verwehrt wird, so dass die Gefahr des Abplatzens und Ausblühens nicht besteht. Grundsätzlich können aber auch alle Flächen eines grobkeramischen Produktes mit Säure behandelt sein. Das Verfahren ist für grobkeramische Produkte wie Dach- und Mauerziegel der verschiedensten Art, Klinkersteine und dergleichen geeignet. Besonders vorteilhaft ist es jedoch zur Herstellung von Dachziegeln, die einerseits den Witterungseinflüssen besonders stark ausgesetzt sind und andererseits auch stets als Sichtflächen eines Baukörpers dienen.

### Weg zur Ausführunq der Erfindung

Ausführungsbeispiele des erfindungsgemässen Verfahrens werden nachfolgend näher beschrieben.

Es wurde ein kalkreiches Tonmaterial mit einem Kalkgehalt von mehr als 10% in üblicher Weise aufbereitet, wobei jedoch darauf geachtet wurde, dass die Korngrösse des Kalks kleiner als 1 mm war. Aus dem aufbereiteten Tonmaterial wurden Ziegel gepresst und dann in üblicher Weise getrocknet. Vor dem Brennen wurden die Ziegel an der Sichtfläche mit normalem Haushaltsessig, der eine Konzentration von 4,5% aufwies, behandelt. Dann wurden die Ziegel während 25 Stunden bei üblichen Brenntemperaturen gebrannt. Während an den übrigen Flächen gelegentlich Abplatzungen festgestellt werden konnten, war dies an der mit Essig behandelten Sichtfläche nicht der Fall.

Das Verfahren ist auch vorteilhaft für Tonmaterialien mit weniger als 10% Kalkgehalt.

Gegebenenfalls können auch Säuren mit einer 10% übersteigenden Konzentration verwendet werden.

Besonders vorteilhaft ist es auch, dass solche mit Säure behandelten Oberflächen der Produkte eine rötliche Färbung erhalten, so dass man auf eine zusätzliche Einfärbung (Engobieren) verzichten kann.

## Patentansprüche

1. Verfahren zur Herstellung von grobkeramischen Produkten wie Dach- und Mauerziegeln, wobei aus aufbereitetem Tonmaterial Rohlinge geformt, letztere getrocknet und dann gebrannt werden, dadurch gekennzeichnet, dass man die Rohlinge vor dem Brennen mindestens an einer Sichtfläche mit einer Säure behandelt.

2. Verfahren nach Anspruch 1, dadurch gekennzeichnet, dass man eine schwache Säure verwendet.

3. Verfahren nach Anspruch 1 oder 2, dadurch gekennzeichnet, dass man Essigsäure, vorzugsweise in einer Konzentration von 4 bis 10 % verwendet.

4. Verfahren nach einem der Ansprüche 1 bis 3, dadurch gekennzeichnet, dass man die Säure aufsprüht.

5. Verfahren nach einem der Ansprüche 1 bis 3, dadurch gekennzeichnet, dass man die Säure aufpinselt.

6. Verfahren nach einem der Ansprüche 1 bis 3, dadurch gekennzeichnet, dass man die Säure aufrollt.

7. Verfahren nach einem der Ansprüche 1 bis 6, dadurch gekennzeichnet, dass man die Säure vor einem allfälligen Engobieren oder Glasieren der Rohlinge aufbringt.

8. Verfahren nach einem der Ansprüche 1 bis 7, dadurch gekennzeichnet, dass man die Säure auf den nassen Rohling aufbringt.

9. Verfahren nach einem der Ansprüche 1 bis 7, dadurch gekennzeichnet, dass man die Säure auf den getrockneten Rohling aufbringt.

10. Verfahren nach einem der Ansprüche 1 bis 9, dadurch gekennzeichnet, dass man ein kalkreiches Tonmaterial, vorzugsweise mit einem Kalkgehalt von mehr als 10% verwendet.

11. Verfahren nach einem der Ansprüche 1 bis 10, dadurch gekennzeichnet, dass man das Tonmaterial so aufbereitet, dass der enthaltene Kalk eine Korngrösse kleiner als 1mm aufweist.

## Claims

1. A process for producing coarse ceramic products such as roof tiles and bricks, in which blanks are formed from prepared clay material, dried and then fired, characterized in that the blanks are treated with an acid on at least one visible face before being fired.

2. A process according to claim 1, characterized in that there is used a weak acid.

3. A process according to claim 1 or 2, characterized in that there is used acetic acid, preferably in a concentration of 4 to 10 %.

4. A process according to any one of claims 1 to 3, characterized in that the acid is applied by spraying.

5. A process according to any one of claims 1 to 3, characterized in that the acid is applied by painting.

6. A process according to any one of claims 1 to 3, characterized in that the acid is applied by rolling.

7. A process according to any one of claims 1 to 6, characterized in that the acid is applied before the blanks are eventually engobed or glazed.

8. A process according to any one of claims 1 to 7, characterized in that the acid is applied to the wet blank.

9. A process according to any one of claims 1 to 7, characterized in that the acid is applied to the dried blank.

10. A process according to any one of claims 1 to 9, characterized in that there is used a lime-rich clay material preferably having a lime content of more than 10%.

11. A process according to any one of claims 1 to 10, characterized in that the clay material is prepared in such manner that the lime contained therein has a grain size of less than 1mm.

## Revendications

1. Procédé de fabrication de produits en céramique grosse tels que tuiles et briques, dans lequel on forme des pièces brutes à partir de matériau argileux élaboré et celles-ci sont séchées puis cuites, caractérisé en ce que les pièces brutes sont traitées avec un acide avant leur cuisson, au moins sur une surface visible.

2. Procédé selon la revendication 1, caractérisé en ce que l'on utilise un acide faible.

3. Procédé selon la revendication 1 ou 2, caractérisé en ce que l'on utilise de l'acide acétique, de préférence sous une concentration de 4 à 10 %.

4. Procédé selon l'une des revendications 1 à 3, caractérisé en ce que l'on pulvérise l'acide sur la surface.

5. Procédé selon l'une des revendications 1 à 3, caractérisé en ce que l'on badigeonne l'acide au pinceau sur la surface.

6. Procédé selon l'une des revendications 1 à 3, caractérisé en ce que l'on applique l'acide au rouleau sur la surface.

7. Procédé selon l'une des revendications 1 à 6, caractérisé en ce que l'on applique l'acide sur la surface avant de procéder éventuellement à un engobage ou un vernissage des pièces brutes.

8. Procédé selon l'une des revendications 1 à 7, caractérisé en ce que l'on applique l'acide sur la surface de la pièce brute mouillée.

9. Procédé selon l'une des revendications 1 à 7, caractérisé en ce que l'on applique l'acide sur la surface de la pièce brute séchée.

10. Procédé selon l'une des revendications 1 à 9, caractérisé en ce que l'on utilise un matériau argileux riche en calcaire, de préférence avec une teneur en calcaire de plus de 10 %.

11. Procédé selon l'une des revendications 1 à 10, caractérisé en ce que l'on élabore le matériau argileux de telle façon que le calcaire qu'il contient présente une dimension de grains inférieure à 1mm.
